# EUROPEAN PATENT SPECIFICATION

(11) **EP 2 089 585 B1**
(45) Date of publication and mention of the grant of the patent: **04.01.2012**
(21) Application number: 07835230.9
(22) Date of filing: 23.11.2007
(51) Int. Cl.: E04B 1/61, A63H 33/12, E04B 2/72, F16B 5/02

(54) **A CONSTRUCTION KIT COMPRISING A PLURALITY OF PANEL ELEMENTS**
BAUSATZ MIT MEHREREN PANEELELEMENTEN
KIT DE CONSTRUCTION COMPORTANT UNE PLURALITÉ D'ÉLÉMENTS DE TYPE PANNEAUX

(30) Priority: 06.12.2006 SE 0602618
(43) Date of publication of application: 19.08.2009
(73) Proprietor: Tonian AB, 183 57 Täby (SE)
(72) Inventor: Johansson, Björne, 183 57 Täby (SE)
(74) Representative: Rosenquist, Per Olof
(86) International application number: PCT/SE2007/001033
(87) International publication number: WO 2008/069721

(56) References cited:
- WO-A1-00/01457
- DE-C- 818 281
- FR-A- 966 211
- GB-A- 415 250

## Description

The invention relates to a construction kit, which comprises a plurality of panel elements, which mutually have substantially equal thickness, and which, in the extension plane thereof, have an area that comprises a number of mutually equal square part areas, connecting elements for mutual connection of panel elements, as well as fastening elements for attachment of the panel elements to the connecting elements.

Construction kits are previously known in many different embodiments, and have their advantages and failings.

GB 415 250 discloses junctions or connections for use in assembly of perforated strips and the like, comprising a flate plate or an angle piece, having a bolt hole in either end, a series of perforations or recesses disposed in a circle concentric to one of said bolt holes and two or more studs or projections disposed concentrically around the other bolt hole. With this arrangement a rigid connection between two perforated strips can be created in a plane or at an angle.

Construction kits having plane panel elements and mutually equal thickness are often preferable, and then it is known to form the panel elements with a rectangular area that is formed of a number of mutually equal square part areas. Each panel element has a centre plane that is parallel to and at equal distance from the two main surfaces of the panel element. If two or more such panel elements are to be joined and connected in a common plane, it is naturally desirable to retain the division of the part areas across the joint, by arranging the connecting elements in the corresponding manner. In this case, the connecting elements should clamp the panel elements in butt-joint relation. But if it is desired to join an additional panel element perpendicular thereto, in the joint region between two panel elements, and in such a way that the centre plane of the additional panel element lies at the joint, the problem occurs that the edge of the additional panel element cannot be brought down to the centre plane of adjoining panel elements. This means that the distance between nearby panel elements along their centre planes cannot be made equal to the distance between nearby panel element part areas, because of said interference. Further, other problems arise in structures composed of a plurality of panel elements that are built together at a mutual angle.

Therefore, an object of the invention is to provide a construction kit that obviates said problems, and without interferences allows the construction of three-dimensional regular structures, wherein the structures can be further added with panel elements belonging to the construction kit without special solutions having to be resorted to.

The object is attained by the invention.

The invention is defined in the appended independent claim 1.

Embodiments of the invention are defined in the appended dependent claims and in the embodiment accounted for below, which is described with reference being made to the appended drawing.
- Fig. 1: shows a first embodiment of a panel element belonging to a construction kit.
- Fig. 2: shows a second example of a panel element.
- Fig. 3: shows a third example of a panel element.
- Figs. 4 and 5: show two examples of a connecting element belonging to the construction kit.
- Fig. 6: shows a structure that is composed of parts belonging to the construction kit.
- Fig. 7: shows another example of a structure built up by elements belonging to a construction kit.
- Fig. 8: schematically shows a three-dimensional structure constructed from parts belonging to the construction kit.
- Fig. 9: shows an alternative hole pattern of the part areas of the panel elements.
- Fig. 10: shows another connecting element.

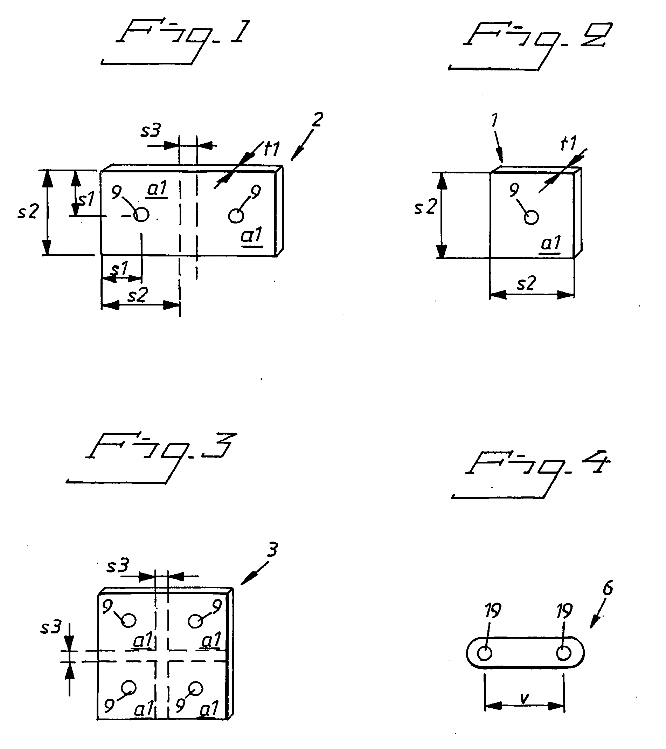

In Fig. 1, there is shown a panel element 2 that consists of a plane rectangular panel of thickness t1. In the extension plane thereof, the panel element 2 comprises two mutually equal square part areas a1, which are aligned with each other and have a central through hole 9. The part areas a1 are spaced-apart by a distance s3 and have parallel adjacent edges. The part areas a1 have side edges that are aligned with each other along the long edges of the panel element 2.

Fig. 2 shows another panel element 1 that consists of a square part area a1 and has the thickness t1 and a central hole 9, as well as naturally the same edge length s2 as the part areas a1 in other panel elements belonging to the construction kit.

As a further example, Fig. 3 shows a panel element 3 that is formed of four part areas a1, which are mutually as large as the other part areas in other panel elements belonging to the construction kit.

Once again, nearby part areas a1 are spaced-apart by a distance s3, and the part areas a1 that are closest to the outer edges of the rectangular panel element 3 have at least one side edge coinciding with the outer edge of the panel element 3. Such as shown in Fig. 1, the hole 9 has the centre thereof situated at a distance s1 from the respective edge of the part area a1, wherein s1 = s2/2.

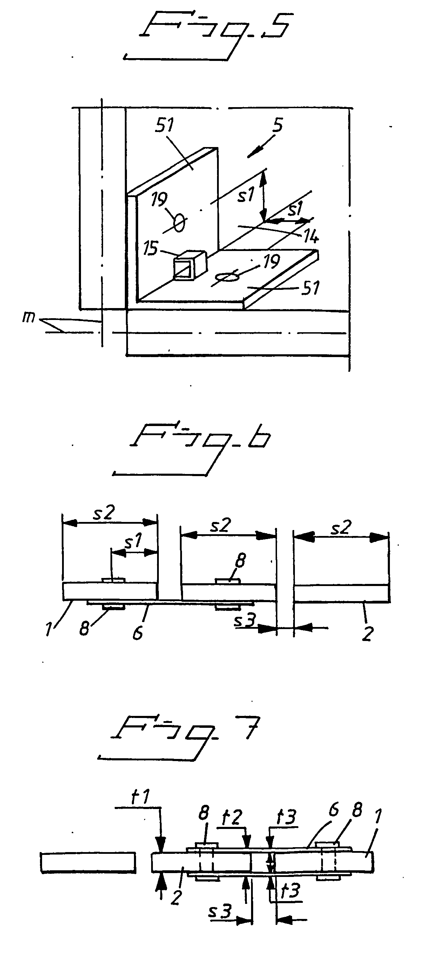

Fig. 4 shows a connecting element 6, which comprises a plane thin plate element, the length of which suitably is smaller than the length of the panel element 2, and furthermore has a pair of bores 19 that are spaced-apart by a distance v, corresponding to the centre distance between the holes 9 in the panel element 2. With plate element, reference is here made to an element of a thin sheet material that may consist of metal or another suitable material such as plastic. It will be appreciated that two panel elements according to any one of Figs. 1-3 can be interconnected in the plane thereof by means of a connecting element 6 according to Fig. 4, such as indicated in Fig. 6, where it is possible to see that a panel element 1 (Fig. 2) and a panel element 2 (Fig. 1) are interconnected by a plane plate element 6 according to Fig. 4, joints 8, for instance of the screw-and-nut type, extending through the openings 19, 9 aligned with each other. In this connection, a gap x3 is accordingly established between the nearby edges of the panel elements 1 and 2, and said gap x3 corresponds precisely to the distance s3 between the part areas a1 of a panel element 2, 3 comprising two or more part areas.

As is seen in Fig. 5, the construction kit may also comprise a connecting element 5, which consists of sheet metal or another suitable material and comprises two branches 51, which are plane and form a right angle with each other, and which in each branch have a bore 19, the distance of which from the intersecting line 14 of the extension plane of the branches 51 is s1. The line 14 represents the intersecting line between the surfaces of the branches 51 facing away from each other.

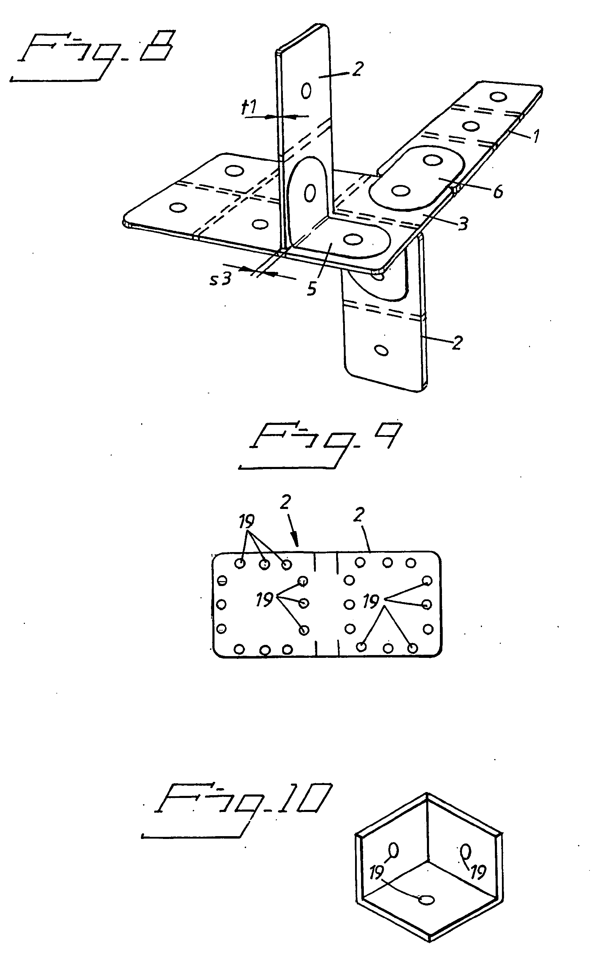

By means of fittings 5, it is for instance possible to attach a panel element 2 to a panel element 3 in the way that is illustrated in Fig. 8, viz. so that the thickness dimension t1 of the panel element 2 precisely fits into the distance s3 between nearby part areas of the panel element 3. Furthermore, in Fig. 8, it can be seen that a panel element 2 that is added at a right angle to the panel element 3 by means of the connecting element 5, is placed so that the main surfaces of the panel element 2 substantially coincide with the edges of two nearby part areas of the panel element 3.

In Fig. 5, it can be seen that the connecting element 5 at the interior angle thereof has a projecting body 15, which may be formed by cutting and punching. The body 15 serves to form a physical obstruction that instructs the user of the construction kit about the unsuitability of placing a panel element 1, 2, 3 in the interior angle of the fitting 5. The body 15 may naturally be given many other designs.

As an example, it may be mentioned that the branches 51, which in the regions thereof situated around the openings 19 indeed should be plane and perpendicular to each other, may have a curved transition, which means that a panel element that abuts the inside of a branch 51 cannot come down to the region of the extension plane of the other branch 51. Concerning the connecting element according to Fig. 5, the openings 19 should naturally be centred in a normal plane of the line 14, so that the openings 19 fit against edge-parallel, mutually perpendicular panel elements 1-3, which are joined with the connecting element 5.

The invention is naturally not limited to construction kits that embrace one or more of one or more of the shown panel elements 1-3, but may comprise many other types of panel elements constructed in accordance with the principle taught, so that they comprise a number of square areas that have adjacent edges in parallel and right opposite to each other, and spaced-apart by a distance s3 corresponding to the thickness t1 of the panel elements. In a further development of the invention, which is shown in Fig. 7, it is however possible to select to set the distance s3 somewhat greater than t1, viz. = t1 + 2 × t3, where t3 is the thickness of the connecting elements 6, so that the resulting thickness of two panel elements t1 and two plate elements 6 connecting them corresponds to the distance s3 between two part areas of a panel element 2, 3.

The bores do not necessarily have to be in the centre of the respective part area, and neither need to be present in each part area of a panel element. As an alternative to a central bore, a bore may for instance be present at the longitudinally central region of the respective part-area edge, at an equal and short distance from the same. Alternatively, two or more bores may be present along each edge at mutually equal distance along the edge, the hole pattern preferably being mirror-symmetrical along the edge. The connecting elements are naturally adapted according to this and have at least some hole that has been adjusted according to the holes in the part areas.

In Fig. 9, an example of such an alternative hole pattern is shown.

The connecting elements included in the construction kit may naturally also comprise a corner element embracing three plates attached perpendicularly to each other, such as illustrated in Fig. 10.

In Fig. 6, it is illustrated that the distance along the centre plane of the panel elements, from the centre of the part area of one panel element to the centre of the part area of the other panel element along their centre planes, corresponds to the edge length of the panel elements plus the mutual distance S3 between nearby part areas of the panel element.

From Fig. 7, it can be understood that the distance s3 may be selected greater than the thickness t1 of the panel element, for instance in order to accommodate the thickness of the connection plates 6. Preferably, s3 is smaller than 3 × t1.

In the embodiment examples according to Figs. 1-8, screw-nut joints are utilized, which extend through appurtenant holes 19 in the connecting elements and holes 9 in the panel elements, but it is evident for a person skilled in the art that other fastening elements may be utilized, for instance in the form of wood screws, or in the form of Velcro couplings or the like, the fastening elements preferably being of such a kind that they, together with the connecting elements, define the predetermined distance between nearby panel elements.

In the embodiment, the panel elements are shown to be perpendicularly cut off at the border of the part areas where the panels have said thickness, but it will be appreciated that in special embodiments, it is possible to choose to let the panel elements have an outwardly tapering extension past said border, wherein the extension, as an example, could be generally triangular and have a tip height that is at most equal to t3/2, wherein panel elements having several part areas naturally should have recesses at least in the region between the part areas, in order to be able to receive therein such an extension of the edge of a panel element attaching perpendicularly thereto. Furthermore, a recess that is formed between edge extensions facing each other of two panel elements joined in a common plane has to be able to receive the edge extension of a panel element attaching perpendicularly thereto. The appended claim 1 defines the basic design of the invention and should also be regarded to cover the previously mentioned embodiments.

## Claims

1. A construction kit comprising a plurality of panel elements (1, 2, 3), each one of which has a thickness (t1) and, in the extension plane thereof, an area that comprises a number of mutually equal square part areas (a1), connecting elements (5, 6) for mutual connection of panel elements, and fastening devices (8) for mutual attachment of connecting elements (5, 6) and panel elements, **characterized in that**, in panel elements (2, 3) having two or more square part areas (a1), nearby edge-parallel part areas (a1) aligned with each other are spaced-apart by a distance (s3) that is greater than or equal to the thickness (t1) of the panel element, that the outer edges of the panel elements (1, 2, 3) in the extension plane coincide with the edges of the adjacent square part areas (a1), and that the connecting elements (5, 6) are arranged to hold adjacent interconnected panel elements at a distance along their centre planes parallel to the extension plane, amounting to the distance (s3) between nearby panel element part areas (a1).

2. Construction kit according to claim 1, **characterized in that** the distance (s3) is at most 3 × the thickness (t1) of the panel element and is preferably substantially equal to the thickness (t1) of the panel element.

3. Construction kit according to claim 1 or 2, **characterized in that** the fastening devices (8) comprise fastening elements, preferably screw-nut joints, which extend through appurtenant mutually aligned holes (19; 9) in the connection device (5, 6) and the panel element (2) part area (a1), respectively.

4. Construction kit according to any one of claims 1-3, **characterized in that** each panel element (2) has at least one hole (9) in a part area (a1) and preferably in each part area.

5. Construction kit according to claim 3 or 4, **characterized in that** the hole (9) in the panel element (2) is centrally placed in the part area (a1).

6. Construction kit according to any one of claims 3-5, **characterized in that** the part area (a1) has a plurality of holes (9), the holes being situated at equal distance (s1) from the edge of the part area (a1) and at equal distance (s1) from the ends of the edge.

7. Construction kit according to any one of claims 1-6, **characterized in that** the connecting elements (5, 6) comprise a first type of connecting elements (6) embracing a plane piece of sheet metal having through bores (19), and a second type of connecting elements, which have two flat branches (51) that form a, preferably, right angle with each other.

8. Construction kit according to claim 7, **characterized in that** the mutual distance (v) between the bores (19) in the first type of connecting element (6) corresponds to the centre distance between central bores in two adjacent part areas (a1) of a panel element, and that the bores (19) in the branches of the second type of connecting element is situated at a distance from the intersecting line between the plane of the branches (51), corresponding to the half edge length (s2) of a part area (a1).

9. Construction kit according to claim 3, **characterized in that** the fastening devices (8) are in the form of screw-nut joints, the screw extending through a bore (19) in a connecting element and the opening (9) in a panel element and co-operating with a nut, wherein the connecting element (6) and the panel element (1, 2, 3) can be clamped together between the head of the screw and the nut.

10. Construction kit according to any one of claims 1-9, **characterized in that** the distance (s3) between nearby part areas (a1) of the panel elements (2, 3) amounts to at least the thickness (t1) of the panel element plus the thickness (t3) of at least one, preferably two connecting elements (5, 6).

## Patentansprüche

1. Bausatz mit mehreren Paneelelementen (1, 2, 3), die jeweils eine Dicke (t1) und, in deren Erweiterungsebene, einen Bereich aufweisen, der umfasst: eine Anzahl beidseitig gleicher, quadratischer Teilbereiche (a1), Verbindungselemente (5, 6) für die beidseitige Verbindung von Paneelelementen, und Befestigungsvorrichtungen (8) für die beidseitige Befestigung von Verbindungselementen (5, 6) und Paneelelementen, **dadurch gekennzeichnet, dass** bei Paneelelementen (2, 3), die zwei oder mehr quadratische Teilbereiche (a1) aufweisen, sich nahe liegende, zur Kante parallele Teilbereiche (a1), aneinander ausgerichtet, und mit einem Abstand (s3), der größer oder gleich der Dicke (t1) des Paneelelements ist, voneinander beabstandet sind, dass die Außenkanten des Paneelelements (1, 2, 3) in der Erweiterungsebene mit den Kanten der angrenzenden quadratischen Teilbereiche (a1) übereinstimmen, und dass die Verbindungselemente (5, 6) angeordnet sind, angrenzende, miteinander verbundene Paneelelemente entlang deren Mittelebenen parallel zu der Erweiterungsebene in einem Abstand zu halten, der den Abstand (s3) zwischen sich nahe liegenden Teilbereichen (a1) der Paneelelemente beträgt.

2. Bausatz nach Anspruch 1, **dadurch gekennzeichnet, dass** der Abstand (s3) meist 3 x die Dicke (t1) des Paneelelements beträgt und vorzugsweise im Wesentlichen gleich der Dicke (t1) des Paneelelements ist.

3. Bausatz nach Anspruch 1 oder 2, **dadurch gekennzeichnet, dass** die Befestigungsvorrichtungen (8) Befestigungselemente umfassen, vorzugsweise Schraubenmutterverbindungen, die sich durch die zugehörigen beidseitig aneinander ausgerichteten Löcher (19; 9) jeweils in der Verbindungsvorrichtung (5, 6) und dem Teilbereich (a1) des Paneelelements (2) erstrecken.

4. Bausatz nach einem der Ansprüche 1 bis 3, **dadurch gekennzeichnet, dass** jedes Paneelelement (2) mindestens ein Loch (9) in einem Teilbereich (a1) und vorzugsweise in jedem Teilbereich aufweist.

5. Bausatz nach Anspruch 3 oder 4, **dadurch gekennzeichnet, dass** das Loch (9) in dem Paneelelement (2) mittig in dem Teilbereich (a1) platziert ist.

6. Bausatz nach einem der Ansprüche 3 bis 5, **dadurch gekennzeichnet, dass** der Teilbereich (a1) eine Mehrheit Löcher (9) aufweist, wobei die Löcher in gleichem Abstand (s1) von der Kante des Teilbereichs (a1) und in gleichem Abstand (s1) von den Kantenenden liegen.

7. Bausatz nach einem der Ansprüche 1 bis 6, **dadurch gekennzeichnet, dass** die Verbindungselemente (5, 6) eine erste Art Verbindungselemente (6) umfassen, die ein ebenes Stück Blech mit durchgehenden Bohrungen (19) umfasst, und eine zweite Art Verbindungselemente, die zwei flache Bereiche (51) aufweist, die vorzugsweise einen rechten Winkel miteinander bilden.

8. Bausatz nach Anspruch 7, **dadurch gekennzeichnet, dass** der beidseitige Abstand (v) zwischen den Bohrungen (19) bei der ersten Art Verbindungselemente (6) dem Mittenabstand zwischen den mittleren Bohrungen in zwei aneinander angrenzenden Teilbereichen (a1) eines Paneelelements entspricht, und dass die Bohrungen (19) in den Bereichen der zweiten Art Verbindungselemente in einem Abstand von der Schnittlinie zwischen der Ebene der Bereiche (51) liegen, der der halben Kantenlänge (s2) eines Teilbereichs (a1) entspricht.

9. Bausatz nach Anspruch 3, **dadurch gekennzeichnet, dass** die Befestigungsvorrichtungen (8) die Form von Schraubenmutterverbindungen haben, wobei sich die Schraube durch eine Bohrung (19) in einem Verbindungselement und die Öffnung (9) in einem Paneelelement erstreckt und mit einer Mutter zusammenwirken, wobei das Verbindungselement (6) und das Paneelelement (1, 2, 3) zwischen dem Schraubenkopf und der Mutter zusammengeklemmt werden können.

10. Bausatz nach einem der Ansprüche 1 bis 9, **dadurch gekennzeichnet, dass** der Abstand (s3) zwischen sich nahe liegenden Teilbereichen (a1) der Paneelelemente (2, 3) mindestens die Dicke (t1) des Paneelelements plus die Dicke (t3) von mindestens einem, vorzugsweise zwei Verbindungselementen (5, 6) beträgt.

## Revendications

1. Kit de construction comprenant une pluralité d'éléments de type panneaux (1, 2, 3), dont chacun présente une épaisseur (t1) et, dans le plan d'extension de celui-ci, une zone qui comprend un certain nombre de zones partielles carrées (a1) égales les unes aux autres, des éléments de connexion (5, 6) pour la connexion réciproque d'éléments de type panneaux, et des dispositifs de fixation (8) pour la fixation réciproque d'éléments de connexion (5, 6) et d'éléments de type panneaux, **caractérisé en ce que**, dans des éléments de type panneaux (2, 3) présentant au moins deux zones partielles carrées (a1), des zones partielles (a1) proches aux bords parallèles alignées les unes avec les autres sont espacées par une distance (s3) qui est supérieure ou égale à l'épaisseur (t1) de l'élément de type panneau, **en ce que** les bords externes des éléments de type panneaux (1, 2, 3) dans le plan d'extension coïncident avec les bords des zones partielles carrées (a1) adjacentes, et **en ce que** les éléments de connexion (5, 6) sont agencés pour maintenir des éléments de type panneaux adjacents interconnectés à une distance le long de leurs plans médians parallèles au plan d'extension, s'élevant à la distance (s3) entre des zones partielles (a1) proches d'élément de type panneau.

2. Kit de construction selon la revendication 1, **caractérisé en ce que** la distance (s3) est au plus 3 x l'épaisseur (t1) de l'élément de panneau et est de préférence essentiellement égale à l'épaisseur (t1) de l'élément de panneau.

3. Kit de construction selon la revendication 1 ou 2, **caractérisé en ce que** les dispositifs de fixation (8) comprennent des éléments de fixation, de préférence des raccords vis-écrou, qui s'étendent à travers des trous (19 ; 9) correspondants alignés les uns avec les autres respectivement dans le dispositif de connexion (5, 6) et la zone partielle (a1) d'élément de type panneau (2).

4. Kit de construction selon l'une quelconque des revendications 1 à 3, **caractérisé en ce que** chaque élément de type panneau (2) présente au moins un trou (9) dans une zone partielle (a1) et de préférence dans chaque zone partielle.

5. Kit de construction selon la revendication 3 ou 4, **caractérisé en ce que** le trou (9) dans l'élément de type panneau (2) est placé de manière centrale dans la zone partielle (a1).

6. Kit de construction selon l'une quelconque des revendications 3 à 5, **caractérisé en ce que** la zone partielle (a1) présente une pluralité de trous (9), les trous étant situés à égale distance (s1) du bord de la zone partielle (a1) et à égale distance (s1) des extrémités du bord.

7. Kit de construction selon l'une quelconque des revendications 1 à 6, **caractérisé en ce que** les éléments de connexion (6) comprennent un premier type d'éléments de connexion (6) enserrant une pièce plane de tôle présentant des trous traversants (19), et un second type d'éléments de connexion qui présentent deux branches plates (51) qui forment l'une avec l'autre un angle de préférence droit.

8. Kit de construction selon la revendication 7, **caractérisé en ce que** la distance réciproque (v) entre les trous (19) dans le premier type d'élément de connexion (6) correspond à la distance de centre à centre entre des trous centraux dans deux zones partielles (a1) adjacentes d'un élément de type panneau, et **en ce que** les trous (19) dans les branches du second type d'élément de connexion sont situés à une distance de la ligne d'intersection entre les plans des branches (51), correspondant à la moitié de la longueur de bord (s2) d'une zone partielle (a1).

9. Kit de construction selon la revendication 3, **caractérisé en ce que** les dispositifs de fixation (8) sont sous forme de raccords vis-écrou, la vis s'étendant à travers un trou (19) dans un élément de connexion et l'ouverture (9) dans un élément de type panneau et coopérant avec un écrou, l'élément de connexion (6) et l'élément de type panneau (1, 2, 3) pouvant être serrés ensemble entre la tête de la vis et l'écrou.

10. Kit de construction selon l'une quelconque des revendications 1 à 9, **caractérisé en ce que** la distance (s3) entre des zones partielles (a1) proches des éléments de type panneaux (2, 3) s'élève à au moins l'épaisseur (t1) de l'élément de type panneau plus l'épaisseur (t3) d'au moins un, de préférence de deux, éléments de connexion (5, 6).
